# EUROPÄISCHE PATENTANMELDUNG

(11) **EP 4 650 896 A1**
(43) Veröffentlichungstag der Anmeldung: **19.11.2025**
(21) Anmeldenummer: 24175420.9
(22) Anmeldetag: 13.05.2024
(51) Int. Cl.: G05B 23/02, G05B 19/406, B65G 43/00

(54) **VERFAHREN ZUM BESTIMMEN EINES ERSTEN ANLAGENZUSTANDS EINER ERSTEN ANLAGENKOMPONENTE EINER FERTIGUNGSANLAGE MIT ZUMINDEST DREI VERKETTETEN ANLAGENKOMPONENTEN, COMPUTERPROGRAMMPRODUKT, COMPUTERLESBARES SPEICHERMEDIUM, ELEKTRONISCHE RECHENEINRICHTUNG SOWIE FERTIGUNGSANLAGE**

(71) Anmelder: Siemens Aktiengesellschaft, 80333 München (DE)
(72) Erfinder: Lutz, Benjamin Samuel, 91091 Großenseebach (DE)
(74) Vertreter: Siemens Patent Attorneys

(57) **Zusammenfassung**

Die Erfindung betrifft ein Verfahren zum Bestimmen eines ersten Anlagenzustands (14) einer ersten Anlagenkomponente (16) einer Fertigungsanlage (10) mit zumindest drei verketteten Anlagenkomponenten (16, 18, 20), mit den Schritten: Bereitstellen einer zweiten Anlagenkomponente (18) mit einer zweiten Zustandserfassungseinrichtung (22) und einer nachgelagerten dritten Anlagenkomponente (18) mit einer dritten Zustandserfassungseinrichtung (24), wobei zwischen der zweiten Anlagenkomponente (18) und der dritten Anlagenkomponente (20) zumindest die eine erste Anlagenkomponente (16) bereitgestellt wird, wobei die erste Anlagenkomponente (16) zustandserfassungseinrichtungslos bereitgestellt wird; Erfassen eines zweiten Anlagenzustands (26) der zweiten Anlagekomponente (18) mittels der zweiten Zustandserfassungseinrichtung (22) und Erfassen eines dritten Anlagenzustands (28) der dritten Anlagekomponente (20) mittels der dritten Zustandserfassungseinrichtung (24); und Bestimmen des ersten Anlagenzustands (14) der ersten Anlagenkomponente (16) in Abhängigkeit von dem zweiten Anlagenzustand (26) und dem dritten Anlagenzustand (28) mittels einer elektronischen Recheneinrichtung (12). Ferner betrifft die Erfindung ein Computerprogrammprodukt, ein computerlesbares Speichermedium, eine elektronische Recheneinrichtung (12) sowie eine Fertigungsanlage (10).

## Beschreibung

Die nachfolgende Erfindung betrifft ein Verfahren zum Bestimmen eines ersten Anlagenzustands einer ersten Anlagenkomponente einer Fertigungsanlage mit zumindest drei verketteten Anlagenkomponenten mittels einer elektronischen Recheneinrichtung der Fertigungsanlage gemäß dem geltenden Patentanspruch 1. Ferner betrifft die Erfindung ein entsprechendes Computerprogrammprodukt, ein computerlesbares Speichermedium, eine elektronische Recheneinrichtung sowie eine Fertigungsanlage.

Zur Bewertung der Effizienz von Fertigungslinien beziehungsweise Fertigungsanlagen wird oft die Overall Equipment Efficiency (OEE)-Kennzahl hergenommen, welche eine Aussage über technische Verfügbarkeit der Anlagen, Ausbringung und Qualität liefert. So gilt es bei schlechter OEE, die Schwachstellen in der Fertigungslinie zu identifizieren, um die Ausbringung und damit Produktivität zu verbessern.

Dies ist insbesondere bei verketteten Fertigungsanlagen, beispielsweise bei der SMT-Fertigung (Surface Mount Technology) von zentraler Bedeutung, da hier ein starr verketteter Prozess vorliegt. Geht somit eine der vielen verwendeten Anlagen oder Transportsysteme in Störung, stoppt die ganze Linie. Somit wirkt sich jede Störung auf die Produktivität der gesamten Linie aus. Dies zeigt sich durch eine geringe OEE-Kennzahl im Vergleich zu anderen Fertigungssystemen.

Um nun eine Produktivitätssteigerung zu erzielen, gilt es, die Zustände der einzelnen Anlagen und Elemente kontinuierlich zu erfassen, um somit Stillstände dem jeweiligen Verursacher zuordnen zu können, die Hauptfehlerschwerpunkte zu erkennen und korrektive Maßnahmen abzuleiten. Herausforderung hierbei ist, dass gerade Bestandsanlagen nicht über Schnittstellen für die automatische Erfassung dieser Daten verfügen beziehungsweise einfache Elemente, wie Transportbänder, diese Information erst gar nicht erfassen.

In der Praxis werden hierzu traditionelle Methoden der LEAN-Philosophie für die Zustandserfassung und Problemlösung verwendet. Dies ist beispielsweise das Aushängen und manuellen Befüllen einer Störmatrix, die Prozessbeobachtung durch LEAN-Experten, der Einbau einer Meldeampel, welche das manuelle Schalten des Zustands erlaubt, sowie das automatische Abgreifen des Anlagenzustands über eine Signalampel der jeweiligen Anlage. Die Schwere der Störung wird hier meist nach Gefühl bewertet, beispielsweise 30 Minuten Stillstand, 60 Minuten Stillstand oder dergleichen. Ein entsprechendes Reporting erfolgt über Mailverkehr.

Aufgabe der vorliegenden Erfindung ist es, ein Verfahren, ein Computerprogrammprodukt, ein computerlesbares Speichermedium, eine elektronische Recheneinrichtung sowie eine Fertigungsanlage zu schaffen, mittels welchen eine verbesserte Überwachung einer Fertigungsanlage realisiert werden kann.

Diese Aufgabe wird durch ein Verfahren, ein Computerprogrammprodukt, ein computerlesbares Speichermedium, eine elektronische Recheneinrichtung sowie eine Fertigungsanlage gemäß den unabhängigen Patentansprüchen gelöst. Vorteilhafte Ausgestaltungsformen sind in den Unteransprüchen angegeben.

Ein Aspekt der Erfindung betrifft ein Verfahren zum Bestimmen eines ersten Anlagenzustands einer ersten Anlagenkomponente einer Fertigungsanlage mit zumindest drei verketteten Anlagenkomponenten mittels einer elektronischen Recheneinrichtung der Fertigungsanlage. Es werden eine zweite Anlagenkomponente mit einer zweiten Zustandserfassungseinrichtung und einer nachgelagerten dritten Anlagenkomponente mit einer dritten Zustandserfassungseinrichtung bereitgestellt, wobei zwischen der zweiten Anlagenkomponente und der dritten Anlagenkomponente zumindest die eine erste Anlagenkomponente bereitgestellt wird, wobei die erste Anlagenkomponente zustandserfassungseinrichtungslos bereitgestellt wird.

Es wird ein zweiter Zustand der zweiten Anlagenkomponente mittels der zweiten Zustandserfassungseinrichtung erfasst und ein dritter Zustand der dritten Anlagenkomponente mittels der dritten Zustandserfassungseinrichtung erfasst. Es erfolgt dann das Bestimmen des ersten Anlagenzustands der ersten Anlagenkomponente in Abhängigkeit von dem zweiten Anlagenzustand und dem dritten Anlagenzustand mittels der elektronischen Recheneinrichtung.

Somit kann der Anlagenzustand der ersten Anlage beziehungsweise der Anlagenkomponente zuverlässig erfasst werden, obwohl diese ohne entsprechende Erfassungseinrichtung beziehungsweise Zustandserfassungseinrichtung bereitgestellt wird. Insbesondere auf Basis der beiden "umringenden" Anlagenkomponenten kann somit dennoch auch auf einen Zustand der ersten Anlagenkomponente geschlossen werden.

Dabei ist insbesondere vorgesehen, dass die verkettete Fertigungsanlage beispielsweise in der Reihenfolge die zweite Anlagenkomponente, dann die erste Anlagenkomponente und dann die dritte Anlagenkomponente aufweist. Es können selbstverständlich auch noch mehr Anlagenkomponenten vorgesehen sein. Die Benennung der einzelnen Anlagenkomponenten ist somit nicht in Reihenfolge vorgesehen. Ferner ist, wie bereits erwähnt, die erste Anlagenkomponente ohne Erfassungseinrichtung ausgebildet. Somit sind im vorliegenden Ausführungsbeispiel lediglich eine zweite Zustandserfassungseinrichtung und eine dritte Zustandserfassungseinrichtung vorgesehen und die Benennung erfolgt nicht als Vorgabe einer Anzahl der Erfassungseinrichtungen sondern lediglich als Zuordnung zu den Anlagenkomponenten.

Bei der Fertigungsanlage handelt es sich somit um eine verkettete Fertigungsanlage, beispielsweise für eine Surface Mounted Technology im Bereich zur Herstellung von elektronischen Bauteilen.

Bei der ersten Anlagenkomponente handelt es sich insbesondere um eine sehr einfache Anlagenkomponente, wie beispielsweise ein Transportband, welches insbesondere keine eigene Zustandsüberwachung aufweist. Auf Basis des Zustands der zuvor liegenden zweiten Anlagenkomponente und der danach liegenden dritten Anlagenkomponente kann dann beispielsweise zuverlässig auf den ersten Anlagenzustand der ersten Anlagenkomponente geschlossen werden. Sollte beispielsweise die zweite Anlagenkomponente und die dritte Anlagenkomponente betriebsbereit sein, aber beispielsweise die dritte Anlagenkomponente kein Bauteil erhalten, so kann davon ausgegangen werden, dass beispielsweise die erste Anlagenkomponente eine Störung aufweist.

Insbesondere, da somit nicht alle Anlagenkomponenten der Fertigungskette Fehlerfälle direkt erfassen können, gilt es, insbesondere in der sogenannten Datenvorverarbeitung Wissen zu ergänzen. Somit ist es möglich, auch nicht-überwachte Prozesse zu überwachen. Hierfür wird der Ansatz verwendet, dass die komplette Prozesskette in die entsprechenden überwachten Komponenten und in die nicht-überwachten Komponenten eingeteilt ist. Umschließen nun wiederum zwei überwachte Komponenten (zweite Anlagenkomponente und die dritte Anlagenkomponente) eine oder mehrere nicht-überwachte Komponenten (erste Anlagenkomponente), so kann anhand der Information der überwachten Komponenten ein Zustand der nicht-überwachten Komponenten abgeleitet werden.

Dabei erfolgt die Analyse des Zustands der nicht-überwachten Komponenten über einen Vergleich der Zustände der davor und danach liegenden überwachten Komponenten. Hat beispielsweise die davor liegende Komponente somit die Produktion einer Leiterplatte als Produkt abgeschlossen, fährt diese aber nicht aus der Komponente selbst heraus, so kann entweder ein Stau oder aber auch eine Störung der darauffolgenden nicht-überwachten Komponente vorliegen. Ist nun zusätzlich die darauffolgende überwachte Komponente im Zustand betriebsbereit, so handelt es sich um eine Störung, während wiederum diese Komponente im Zustand Stau wäre, so liegt ein Stau vor.

Handelt es sich beispielsweise bei der davor liegenden überwachten Komponente um einen Inspektionsprozess, wie beispielsweise SPI, AOI, ICT oder CCI und der nicht-überwachten Komponente um ein Schlechtpuffer, in welchem schlecht-geprüfte Baugruppen für eine manuelle Inspektion ausgeschleust werden, so kann durch Hinzunahme des Prüfergebnisses ein differenzierterer Zustand der nicht-überwachten Komponente (erste Anlagenkomponente) beziehungsweise der nicht-überwachten Komponente abgeleitet werden. Die Anlagenkomponenten können nachfolgend auch als Assets bezeichnet werden.

Sollte beispielsweise die zweite Anlagenkomponente auf eine Bauteilausgabe warten, die dritte Anlagenkomponente einen Stau melden und das Prüfergebnis gut sein, so liegt ein Stau bei der unüberwachten Komponente vor. Sollte die zweite Anlagenkomponente auf eine Bauteilausgabe warten, die dritte Anlagenkomponente einen Stau melden und das Prüfergebnis schlecht sein, so kann der Schlecht-Puffer voll sein. Sollte beispielsweise die zweite Anlagenkomponente auf eine Bauteilausgabe warten, die dritte Anlagenkomponente betriebsbereit sein und das Prüfergebnis gut sein, so kann eine Störung des Transportsystems vorliegen. Wenn die zweite Anlagenkomponente auf eine Bauteilausgabe wartet, die dritte Anlagenkomponente betriebsbereit ist und das Prüfergebnis ist schlecht, so kann der Schlechtpuffer entsprechend voll sein.

Durch die vorgestellte Lösung ist es möglich, automatisch den Anlagen- und Störzustand sowohl für überwachte als auch für unüberwachte Anlagenkomponenten zu erfassen.

Für überwachte Anlagenkomponenten ist es somit möglich, eine eindeutige Kategorisierung des Fehlerzustands durchzuführen und diesen zu quantifizieren. Für nicht-überwachte Anlagenkomponenten ist es durch das vorgestellte Verfahren möglich, den übergeordneten Zustand zu erfassen und zu quantifizieren. Somit können auch solche Anlagenkomponenten bei einer Analyse der häufigsten Fehler berücksichtigt werden.

Die elektronische Recheneinrichtung kann zusätzlich dazu ausgebildet sein, je nach Anlagenzustand entsprechende Steuersignale für die Fertigungsanlage und/oder Anlagenkomponenten zu erzeugen. Beispielsweise können je nach Zustand Fertigungsgeschwindigkeiten angepasst werden, Alarmsignale erzeugt werden, einzelnen Komponenten oder die gesamte Fertigungsanlage gestoppt werden, oder spezifische Gegenmaßnahmen eingeleitet werden.

Gemäß einer vorteilhaften Ausgestaltungsform wird in Abhängigkeit von dem ersten Anlagenzustand und dem zweiten Anlagenzustand und dem dritten Anlagenzustand ein Gesamtanlagenzustand der Fertigungsanlage bestimmt. Somit kann von den einzelnen Zuständen der Anlagenkomponenten auf einen Gesamtanlagenzustand der Fertigungsanlage geschlossen werden. Beispielsweise kann dann eine Zeit bestimmt werden, wie lange die Fertigungsanlage außer Betrieb beziehungsweise im Störmodus ist. Somit kann ein verbesserter Betrieb der Fertigungsanlage realisiert werden.

Eine weitere vorteilhafte Ausgestaltungsform sieht vor, dass ein Zustand einer jeweiligen Anlagenkomponente auf Basis von jeweiligen Log-Einträgen der jeweiligen Anlagenkomponente bestimmt wird. Insbesondere ist somit zur Lösung des oben beschriebenen Problems eine kontinuierliche Erfassung der Anlagenzustände vorgesehen. Dies erfolgt wiederum über die Auswertung der Anlagen-Log-Files anhand einer angepassten Logik. Diese Logik identifiziert dabei relevante Zeilen des Log-Files, welche Aufschluss über einen Zustandswechsel, zum Beispiel Einfahren eines Produkts, Bearbeitungsstart oder Warten geben. Es kann nun eine Interpretation und Anreicherung der Daten durch eine Domänen-spezifische-Logik stattfinden, bevor die Daten in einer Datenbank für die Visualisierung in ein Tool gespeichert werden. Somit kann auf einfache Art und Weise der Anlagenzustand bestimmt werden.

Ferner hat es sich als vorteilhaft erwiesen, wenn auf Basis eines Zustandswechsels innerhalb der Log-Einträge auf einen Zustand der jeweiligen Anlagenkomponente geschlossen wird. Insbesondere kann somit über den Zustandswechsel, zum Beispiel Einfahren eines Produkts, Bearbeitungsstart oder Warten auf den Zustand geschlossen werden. Die erkannten Zustandswechsel werden dann wiederum an die elektronische Recheneinrichtung gesendet und entsprechend domänen-spezifisch ausgewertet. Somit ist ein verbesserter Betrieb der Fertigungsanlage ermöglicht.

Eine weitere vorteilhafte Ausgestaltungsform sieht vor, dass zum Bestimmen des ersten Anlagenzustands der zweite Anlagenzustand mit dem dritten Anlagenzustand verglichen wird. Insbesondere können beim Vergleich entsprechende Betriebseinstellungen der ersten Anlagenkomponente und der zweiten Anlagenkomponente durchgeführt werden. Insbesondere sollten beide beispielsweise betriebsbereit sein, jedoch dennoch eine Störung vorliegen, so kann darauf geschlossen werden, dass die erste Anlagenkomponente entsprechend die Störung aufweist.

Weiterhin vorteilhaft ist, wenn bei einem betriebsbereiten Zustand der zweiten Anlagenkomponente und dritten Anlagenkomponente, und bei einem fertigen Produkt in der zweiten Anlagenkomponente jedoch bei keinem einlaufenden Produkt bei der dritten Anlagenkomponente, auf einen Fehler als ersten Anlagenzustand der ersten Anlagenkomponente geschlossen wird. Insbesondere ist somit ermöglicht, dass auch die unüberwachte erste Anlagenkomponente somit zuverlässig überwacht werden kann.

Weiterhin vorteilhaft ist, wenn zumindest der bestimmte erste Anlagenzustand auf einer Anzeigeeinrichtung der elektronischen Recheneinrichtung angezeigt wird. Dabei kann die Anzeigeeinrichtung beispielsweise direkt an der Fertigungsanlage oder auch zentral ausgebildet sein. Ein Nutzer der elektronischen Recheneinrichtung beziehungsweise Bediener der Fertigungsanlage kann somit auf einfache Art und Weise auf den aktuellen Anlagenzustand hingewiesen werden. Somit können Rückschlüsse auf den aktuellen Anlagenzustand durch den Nutzer auf einfache Art und Weise gemacht werden.

Weiterhin vorteilhaft ist, wenn zumindest der bestimmte erste Anlagenzustand kategorisiert wird und eine bestimmte Kategorie farblich hinterlegt und angezeigt wird. Hierzu kann beispielsweise in Form einer Ampelkategorisierung in betriebsbereit, bedingt betriebsbereit und nicht betriebsbereit kategorisiert werden. Betriebsbereit kann beispielsweise einer grünen Farbe zugeordnet werden, bedingt betriebsbereit einer gelben Farbe zugeordnet werden und nicht betriebsbereit einer roten Farbe zugeordnet werden. Jeder Anlagenkomponente kann dann wiederum die farbliche Hinterlegung des aktuellen Betriebszustands beziehungsweise Anlagenzustands zugeordnet werden. Somit ist es ermöglicht, dass beispielsweise auf der Anzeigeeinrichtung dann die entsprechenden Anlagenkomponenten und deren Anlagenzustände auf einfache Art und Weise angezeigt werden können.

Ferner hat es sich als vorteilhaft erwiesen, wenn zusätzlich in Abhängigkeit von der Art der jeweiligen Anlagenkomponente zumindest der erste Anlagenzustand bestimmt wird. Insbesondere, sollte beispielsweise die Anlagenkomponente als Transportband oder Schlechtpuffer ausgebildet sein, so kann domänenspezifisch eine entsprechende Auswertung und Kategorisierung erfolgen. Somit kann die Art zusätzlich dazu genutzt werden, um entsprechende Anlagenzustände bestimmen zu können.

Weiterhin vorteilhaft ist, wenn die erste Anlagenkomponente als Transportband oder als Schlechtpuffer bereitgestellt wird. Insbesondere bei dem Transportband beziehungsweise den Schlechtpuffern handelt es sich um Anlagenkomponenten, welche keine entsprechende Zustandserfassungseinrichtung aufweisen. Auf Basis des vorgestellten Verfahrens ist es nun ermöglicht, dass auch solche Anlagenkomponenten entsprechend überwacht werden können.

Eine weitere vorteilhafte Ausgestaltungsform sieht vor, dass mittels der Fertigungsanlage eine Oberflächen-Montage-Technologie zum Herstellen eines Produkts durchgeführt wird. Bei der Oberflächen-Montage-Technologie handelt es sich insbesondere um die Surface Mounted Technology (SMT). Bei dem Produkt kann es sich insbesondere um ein elektronisches Bauteil, beispielsweise eine Leiterplatte, handeln. Insbesondere elektronische Bauteile werden in verketteten Prozessanlagen entsprechend hergestellt. Das Verfahren wird somit bevorzugt bei verketteten Fertigungsanlagen in dem vorgestellten Bereich eingesetzt, sodass insbesondere elektronische Bauteile entsprechend zuverlässig hergestellt beziehungsweise die Herstellung zuverlässig überwacht werden kann.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Weiterhin betrifft die Erfindung auch ein computerlesbares Speichermedium mit dem Computerprogrammprodukt nach dem vorhergehenden Aspekt.

Ein nochmals weiterer Aspekt der Erfindung betrifft eine elektronische Recheneinrichtung für eine Fertigungsanlage zum Bestimmen eines ersten Anlagenzustands einer ersten Anlagenkomponente der Fertigungsanlage mit zumindest drei verketteten Anlagenkomponenten, wobei die elektronische Recheneinrichtung zum Durchführen eines Verfahrens nachdem dem vorhergehenden Aspekt ausgebildet ist. Insbesondere wird das Verfahren mittels der elektronischen Recheneinrichtung durchgeführt.

Weiterhin betrifft die Erfindung auch eine Fertigungsanlage mit zumindest einer elektronischen Recheneinrichtung nach dem vorhergehenden Aspekt. Die Fertigungsanlage weist hierzu zusätzlich zumindest drei Anlagenkomponenten in verketteter Form auf.

Vorteilhafte Ausgestaltungsformen des Verfahrens sind als vorteilhafte Ausgestaltungsformen des Computerprogrammprodukts, des computerlesbaren Speichermediums, der elektronischen Recheneinrichtung sowie der Fertigungsanlage anzusehen. Die elektronische Recheneinrichtung sowie die Fertigungsanlage weisen hierzu insbesondere gegenständliche Merkmale auf, um entsprechende Verfahrensschritte durchführen zu können.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Für Anwendungsfälle oder Anwendungssituationen, die sich bei einem erfindungsgemäßen Verfahren ergeben können und die hierin nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Weitere Merkmale und Merkmalskombinationen der Erfindung ergeben sich aus den Figur und deren Beschreibung sowie aus den Ansprüchen. Insbesondere müssen weitere Ausführungsformen der Erfindung nicht unbedingt alle Merkmale eines der Ansprüche enthalten. Weitere Ausführungsformen der Erfindungen können Merkmale oder Merkmalskombinationen aufweisen, die nicht in den Ansprüchen genannt sind.

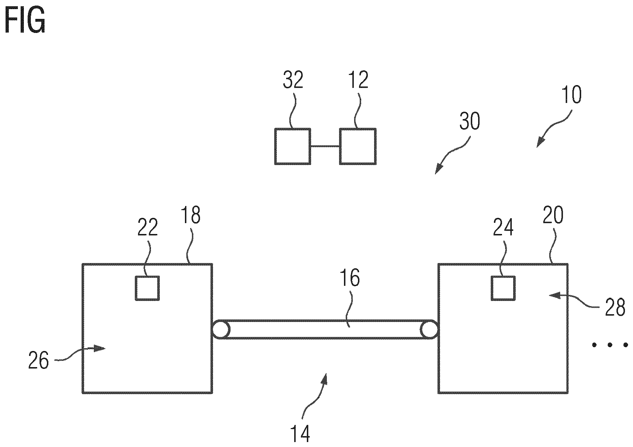

Dabei zeigt die einzige Figur ein schematisches Blockschaltbild gemäß einer Ausführungsform einer Fertigungsanlage mit einer Ausführungsform einer elektronischen Recheneinrichtung.

In den Figuren sind gleiche oder funktionsgleiche Elemente mit den gleichen Bezugszeichen versehen.

Die Figur (Fig) zeigt ein schematisches Blockschaltbild gemäß einer Ausführungsform einer Fertigungsanlage 10. Die Fertigungsanlage 10 weist zumindest eine elektronische Recheneinrichtung 12 auf. Die elektronische Recheneinrichtung 12 ist zum Bestimmen eines ersten Anlagenzustands 14 einer ersten Anlagenkomponente 16 der Fertigungsanlage 10 ausgebildet, wobei die Fertigungsanlage 10 insbesondere zumindest drei verkettete Anlagenkomponenten 16, 18, 20 aufweist.

Beim erfindungsgemäßen Verfahren ist insbesondere vorgesehen, dass zumindest eine zweite Anlagenkomponente 18 mit einer zweiten Zustandserfassungseinrichtung 22 und einer nachgelagerten dritten Anlagenkomponente 20 mit einer dritten Zustandserfassungseinrichtung 24 bereitgestellt wird, wobei zwischen der zweiten Anlagenkomponente 18 und der dritten Anlagenkomponente 20 zumindest die eine erste Anlagenkomponente 16 bereitgestellt wird, wobei die erste Anlagenkomponente 16 zustandserfassungseinrichtungslos bereitgestellt wird. Es wird ein zweiter Anlagenzustand 26 der zweiten Anlagenkomponente 18 mittels der zweiten Zustandserfassungseinrichtung 22 erfasst und es wird ein dritter Anlagenzustand 28 der dritten Anlagenkomponente 20 mittels der dritten Zustandserfassungseinrichtung 24 erfasst. Es erfolgt dann das Bestimmen des ersten Anlagenzustands 14 der ersten Anlagenkomponente 16 in Abhängigkeit von dem zweiten Anlagenzustand 26 und dem dritten Anlagenzustand 28 mittels der elektronischen Recheneinrichtung 12.

Dabei ist insbesondere vorgesehen, dass in Abhängigkeit von dem ersten Anlagenzustand 14 und dem zweiten Anlagenzustand 26 und dem dritten Anlagenzustand 28 ein Gesamtanlagenzustand 30 der Fertigungsanlage 10 bestimmt werden kann. Dabei kann ferner vorgesehen sein, dass ein Anlagenzustand einer jeweiligen Anlagenkomponente 16, 18, 20 auf Basis von jeweiligen Log-Einträgen der jeweiligen Anlagenkomponente 16, 18, 20 bestimmt wird. Insbesondere kann auf Basis eines Zustandswechsels innerhalb der Log-Einträge auf einen Anlagenzustand 14, 26, 28 der jeweiligen Anlagenkomponente 16, 18, 20 geschlossen werden.

Insbesondere kann dabei vorgesehen sein, dass zum Bestimmen des ersten Anlagenzustands 14 der zweite Anlagenzustand 26 mit dem dritten Anlagenzustand 28 verglichen wird. Beispielsweise kann hierzu vorgesehen sein, dass bei einem betriebsbereiten Zustand der zweiten Anlagenkomponente 18 und dritten Anlagenkomponente 20, jedoch bei keinem einlaufenden Produkt bei der dritten Anlagenkomponente 28 ein Fehler als erster Anlagenzustand 14 der ersten Anlagenkomponente 16 geschlossen wird.

Weiterhin kann vorgesehen sein, dass zumindest der bestimmte erste Anlagenzustand 14 auf einer Anzeigeeinrichtung 32 der elektronischen Recheneinrichtung 12 angezeigt wird. Der zumindest erste Anlagenzustand 14 kann ferner kategorisiert werden und eine bestimmte Kategorie farblich hinterlegt und angezeigt werden.

Weiterhin kann vorgesehen sein, dass zusätzlich in Abhängigkeit von der Art der jeweiligen Anlagenkomponenten 16, 18, 20 zumindest der erste Anlagenzustand 14 bestimmt wird. Dabei zeigt die Figur ferner, dass die erste Anlagenkomponente 16 als Transportband ausgebildet ist. Alternativ oder ergänzend kann die erste Anlagenkomponente 16 auch als Schlechtpuffer bereitgestellt werden.

Des Weiteren zeigt die Figur insbesondere, dass mittels der Fertigungsanlage 10 insbesondere eine Oberflächen-Montage-Technologie zum Herstellen eines Produkts durchgeführt wird.

Insbesondere ist somit vorgesehen, dass zur Lösung des beschriebenen Problems eine kontinuierliche Erfassung der Anlagenzustände 14, 26, 28 nötig ist. Dies erfolgt über die Auswertung der Anlagen-Log-Files anhand einer angepassten Logik. Diese Logik identifiziert relevante Zeilen des Log-Files, welche Aufschluss auf einen Zustandswechsel zum Beispiel Einfahren eines Produkts, Bearbeitungsstart oder Warten, geben. Die erkannten Zustandswechsel werden dann an die elektronische Recheneinrichtung 12 gesendet. Nun findet eine Interpretation und Anreicherung der Daten durch eine domänen-spezifische Logik statt, bevor die Daten in eine Datenbank für die Visualisierung in einem Tool gespeichert werden.

Da nicht alle Elemente der Fertigungsanlage 10 und Fehlerfälle direkt erfasst werden können, gilt es, in der Datenvorverarbeitung Wissen zu ergänzen. Somit ist es möglich, auch nicht-überwachte Prozesse zu überwachen. Dabei wird die gesamte Prozesskette in überwachte Anlagenkomponenten 18, 20 und nicht-überwachte Anlagenkomponenten 16 eingeteilt. Umschließen nun zwei überwachte Anlagenkomponenten 18, 20 ein oder mehrere nicht-überwachte Anlagenkomponenten 16, so kann anhand der Information der überwachten Anlagenkomponenten 18, 20 ein Zustand der nicht-überwachten Anlagenkomponente 16 abgeleitet werden.

Die Analyse des Zustands der nicht-überwachten Anlagenkomponente 16 erfolgt über einen Vergleich der Zustände der davor und danach liegenden überwachten Anlagenkomponenten 18, 20. Hat jede vorliegende Anlagenkomponente 18 somit die Produktion beispielsweise einer Leiterplatte abgeschlossen, fährt diese aber nicht aus der zweiten Anlagenkomponente 18 heraus, so kann entweder ein Stau oder aber eine Störung in der darauffolgenden nicht-überwachten ersten Anlagenkomponente 16 vorliegen. Ist nun zusätzlich das darauffolgende überwachte Asset, insbesondere die dritte Anlagenkomponente 20, im Zustand betriebsbereit, so handelt es sich um eine Störung. Befindet sich die dritte Anlagenkomponente 20 in einem Zustand Stau, so liegt ein Stau vor.

Handelt es sich beim vorliegenden überwachten Asset, insbesondere der zweiten Anlagenkomponente 18, um einen Inspektionsprozess, wie beispielsweise SPI, AOI, ICT oder CCI und bei der ersten Anlagenkomponente 16 um einen Schlecht-Puffer, in welchem schlecht-geprüfte Baugruppen für eine manuelle Inspektion ausgeschleust werden, so kann durch Hinzunahme des Prüfungsergebnisses ein differenzierter Zustand der ersten Anlagenkomponente 16 abgeleitet werden.

## Patentansprüche

1. Verfahren zum Bestimmen eines ersten Anlagenzustands (14) einer ersten Anlagenkomponente (16) einer Fertigungsanlage (10) mit zumindest drei verketteten Anlagenkomponenten (16, 18, 20) mittels einer elektronischen Recheneinrichtung (12) der Fertigungsanlage (10), mit den Schritten:
- Bereitstellen einer zweiten Anlagenkomponente (18) mit einer zweiten Zustandserfassungseinrichtung (22) und einer nachgelagerten dritten Anlagenkomponente (20) mit einer dritten Zustandserfassungseinrichtung (24), wobei zwischen der zweiten Anlagenkomponente (18) und der dritten Anlagenkomponente (20) zumindest die eine erste Anlagenkomponente (16) bereitgestellt wird, wobei die erste Anlagenkomponente (16) zustandserfassungseinrichtungslos bereitgestellt wird;
- Erfassen eines zweiten Anlagenzustands (26) der zweiten Anlagekomponente (18) mittels der zweiten Zustandserfassungseinrichtung (22) und Erfassen eines dritten Anlagenzustands (28) der dritten Anlagekomponente (20) mittels der dritten Zustandserfassungseinrichtung (24); und
- Bestimmen des ersten Anlagenzustands (14) der ersten Anlagenkomponente (16) in Abhängigkeit von dem zweiten Anlagenzustand (26) und dem dritten Anlagenzustand (28) mittels der elektronischen Recheneinrichtung (12).

2. Verfahren nach Anspruch 1, **dadurch gekennzeichnet, dass**
in Abhängigkeit von dem ersten Anlagenzustand (14) und dem zweiten Anlagenzustand (26) und dem dritten Anlagenzustand (28) ein Gesamtanlagezustand (30) der Fertigungsanlage (10) bestimmt wird.

3. Verfahren nach Anspruch 1 oder 2, **dadurch gekennzeichnet, dass**
ein Anlagenzustand (14, 26, 28) einer jeweiligen Anlagenkomponente (18, 20) auf Basis von jeweiligen Log-Einträgen der jeweiligen Anlagenkomponenten (18, 20) bestimmt wird.

4. Verfahren nach Anspruch 3, **dadurch gekennzeichnet, dass**
auf Basis eines Zustandswechsels innerhalb der Log-Einträge auf einen Anlagenzustand (14, 26, 28) der jeweiligen Anlagenkomponente (18, 20) geschlossen wird.

5. Verfahren nach einem der vorhergehenden Ansprüche, **dadurch gekennzeichnet, dass** zum Bestimmen des ersten Anlagenzustands (14) der zweite Anlagenzustand (26) mit dem dritten Anlagenzustand (28) verglichen wird.

6. Verfahren nach Anspruch 5, **dadurch gekennzeichnet, dass**
bei einem betriebsbereiten Zustand der zweiten Anlagenkomponente (18) und dritten Anlagenkomponente (20), und bei einem fertigen Produkt in der zweiten Anlagenkomponente (18) jedoch bei keinem einlaufenden Produkt bei der dritten Anlagenkomponente (18) auf einen Fehler als erster Anlagenzustand (14) der ersten Anlagenkomponente (16) geschlossen wird.

7. Verfahren nach einem der vorhergehenden Ansprüche, **dadurch gekennzeichnet, dass** zumindest der bestimmte erste Anlagenzustand (14) auf einer Anzeigeeinrichtung (32) der elektronischen Recheneinrichtung (12) angezeigt wird.

8. Verfahren nach einem der vorhergehenden Ansprüche, **dadurch gekennzeichnet, dass** zumindest der bestimmte erste Anlagenzustand (14) kategorisiert wird und eine bestimmte Kategorie farblich hinterlegt und angezeigt wird.

9. Verfahren nach einem der vorhergehenden Ansprüche, **dadurch gekennzeichnet, dass** zusätzlich in Abhängigkeit von einer Art der jeweiligen Anlagenkomponenten (16, 18, 20) zumindest der erste Anlagenzustand (14) bestimmt wird.

10. Verfahren nach einem der vorhergehenden Ansprüche, **dadurch gekennzeichnet, dass** die erste Anlagenkomponente (16) als Transportband oder als Schlecht-Puffer bereitgestellt wird.

11. Verfahren nach einem der vorhergehenden Ansprüche, **dadurch gekennzeichnet, dass** mittels der Fertigungsanlage (10) eine Oberflächen-Montage-Technologie zum Herstellen eines Produkts durchgeführt wird.

12. Computerprogrammprodukt mit Programmcodemitteln, welche eine elektronische Recheneinrichtung (12) dazu veranlassen, wenn die Programmcodemittel von der elektronischen Recheneinrichtung (12) abgearbeitet werden, ein Verfahren nach einem der Ansprüche 1 bis 11 durchzuführen.

13. Computerlesbares Speichermedium mit zumindest dem Computerprogrammprodukt nach Anspruch 11.

14. Elektronische Recheneinrichtung (12) für eine Fertigungsanlage (10) zum Bestimmen eines ersten Anlagenzustands (14) einer ersten Anlagenkomponente (16) der Fertigungsanlage (10) mit zumindest drei verketteten Anlagenkomponenten (16, 18, 20), wobei die elektronische Recheneinrichtung (12) zum Durchführen eines Verfahrens nach einem der Ansprüche 1 bis 11 ausgebildet ist.

15. Fertigungsanlage (10) mit zumindest einer elektronischen Recheneinrichtung (12) nach Anspruch 14.
